# EUROPEAN PATENT APPLICATION

(11) **EP 2 230 133 A1**
(43) Date of publication of application: **22.09.2010**
(21) Application number: 10155721.3
(22) Date of filing: 08.03.2010
(51) Int. Cl.: B60R 15/04, C02F 1/00, G07F 13/08

(54) **Machine for automatically emptying and washing wc casings used in caravans, campers and the like**

(30) Priority: 16.03.2009 IT MI20090399
(71) Applicant: Bossio, Gianfranco, 87032 Amantea (CS) (IT)
(72) Inventor: Bossio, Gianfranco, 87032 Amantea (CS) (IT)
(74) Representative: Cicogna, Franco

(57) **Abstract**

A machine for automatically emptying and washing WC casings used in caravans, campers and the like, **characterized in that** said machine comprises a WC casing holding body including an opening having a safety transparent door therein is engageable a WC casing to be washed; said machine further comprising detecting means for detecting a presence of said casing to automatically start a washing procedure; rotary means for rotating said casing for emptying said casing as said casing is washed; spraying means for spraying a pressurized fluid for washing said casing; safety means for switching off the washing operation if the access door is accidentally opened; electronic control means for electronically controlling the operation; and washing and waste fluid outlet means.

## Description

### BACKGROUND OF THE INVENTION

The present invention relates to a machine for automatically emptying and washing WC casings used in caravans, campers and the like.

As is known, campers, caravans and so on conventionally comprise WC casings or boxes for collecting waste materials produced in sanitary systems installed thereon.

The WC casings must be periodically emptied and washed, and, as it should be apparent, this operation is a very fatiguing one.

At present, the washing and emptying of the above mentioned WC casings are manually performed, generally at areas equipped for parking caravans.

This procedure involves the presence of bad smell casings, at any hours of the day and collecting contaminated and dirt wells.

### SUMMARY OF THE INVENTION

Accordingly, the aim of the present invention is to provide a machine which is specifically designed for automatically emptying and washing WC casings in a fully autonomous and automatic manner, without the need of performing manual operations, thereby eliminating all the environmental problems thereinabove disclosed.

Within the scope of the above mentioned aim, a main object of the invention is to provide such a machine which can be installed both in dedicated areas and in any other desired places, without negatively affecting the environmental safety.

Another object of the present invention is to provide such a machine construction which, owing to its specifically designed features, is very reliable and safe in operation.

Yet another object of the present invention is to provide such a machine construction which can be made starting from easily commercially available elements and material and which, moreover, is very competitive from a mere economic standpoint.

According to one aspect of the present invention, the above mentioned aim and objects, as well as yet other objects, are achieved by a machine for automatically emptying and washing WC casings used in caravans, campers and the like, **characterized in that** said machine comprises a holding body including an opening having a safety door, therein is engageable a WC casing to be emptied and washed.

Said machine comprises detecting means for detecting a presence of said WC casing to automatically start a washing procedure; rotary means for rotating said casing for emptying said casing as said casing is washed; spraying means for spraying a pressurized fluid for washing said casing; safety means for switching off the washing operation if the access door is accidentally left opened; electronic control means for electronically controlling the operation; and washing and waste fluid outlet means.

The machine according to the present invention may be advantageously controlled by a token operated control system.

### BRIEF DESCRIPTION OF THE DRAWINGS

Further characteristics and advantages of the present invention will become more apparent hereinafter from the following detailed description of a preferred, though not exclusive, embodiment of the invention which is illustrated, by way of an indicative, but not limitative, example in the accompanying drawings, where:

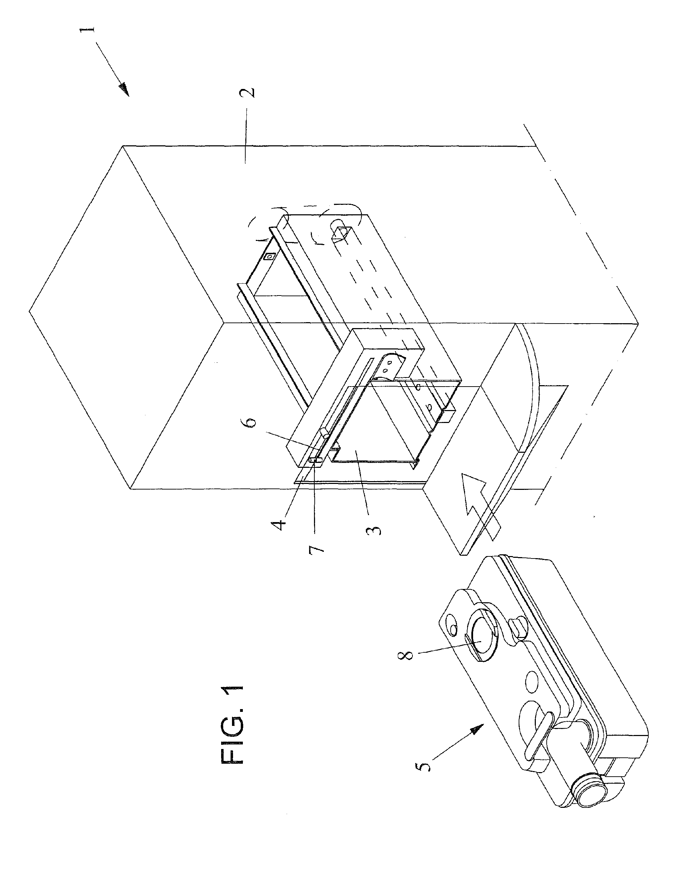

Figure 1 is a perspective view showing a general use 20 Kg WC casing (of a THETFORD type), during its engagement operation in the machine by a loading shelf element;

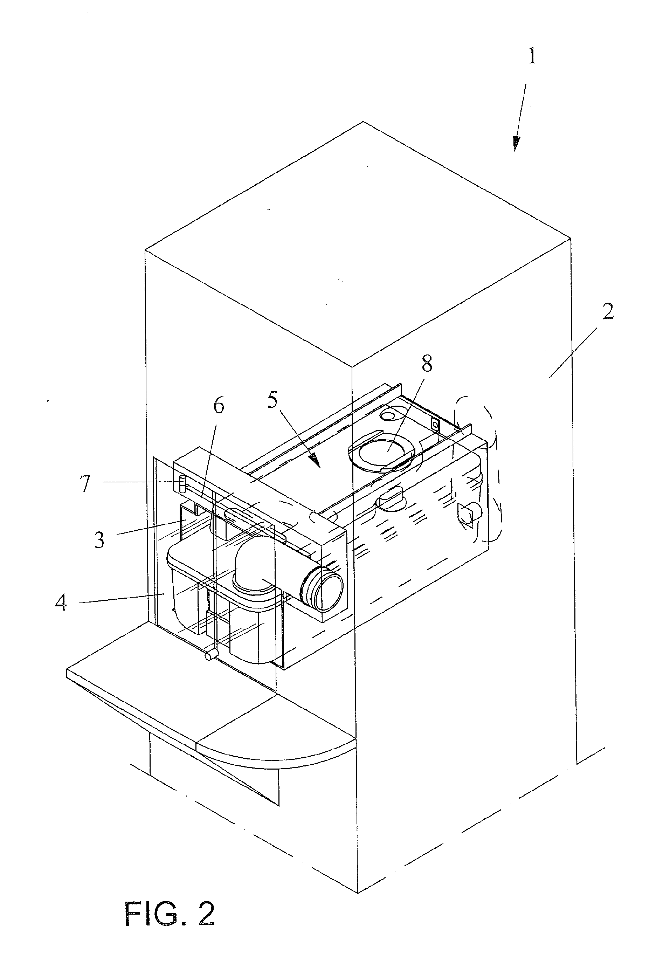

Figure 2 is a perspective view, similar to figure 1, illustrating the front portion of the machine with the WC casing engaged therein;

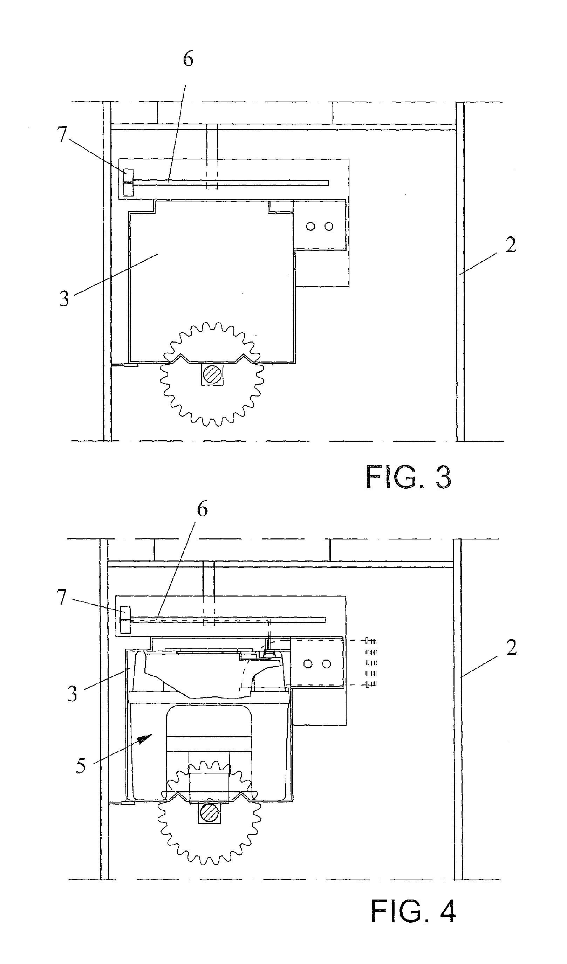

Figure 3 is a front view of the WC inner casing seat in an open position thereof;
Figure 4 is yet another front view of the WC inner casing seat in an open position thereof;

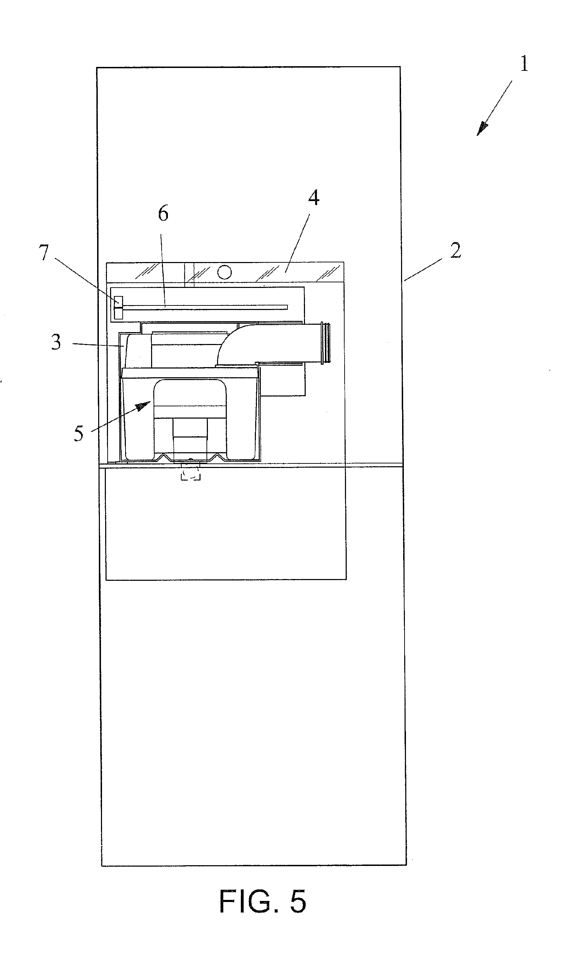

Figure 5 shows the operation for engaging the WC casing in its seat;

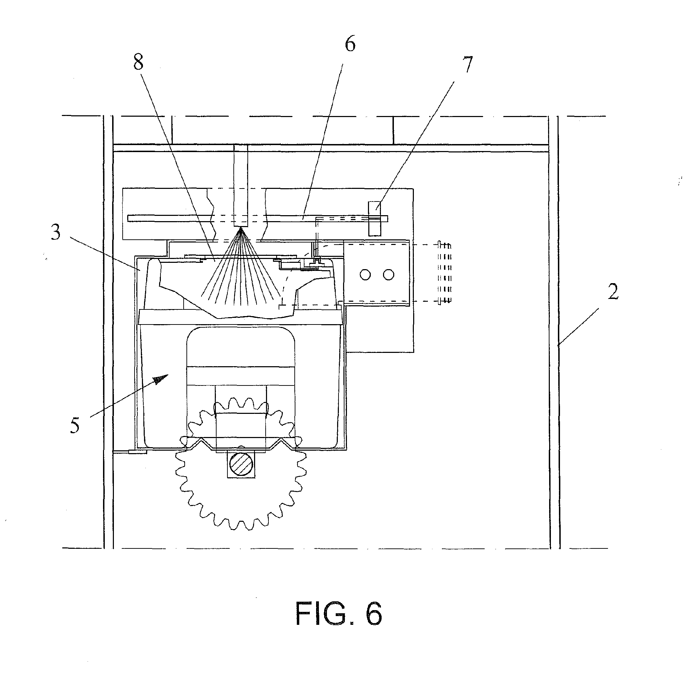

Figure 6 shows an inserted or engaged WC casing, manually opened, with its plug in a dedicated outer seat, with a switched on safety means (START) and a manual closure of a guillotine door and with enabling means for performing an automatic washing operation;
Figure 7 shows the machine during the casing emptying operation;
Figure 8 shows the machine at the end of the operation and during the casing restitution or return operation; and

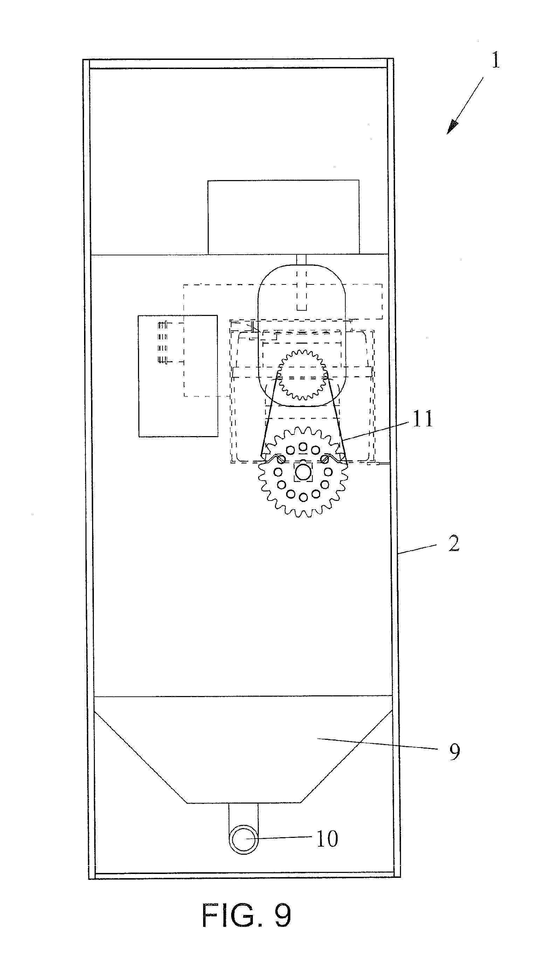

Figure 9 is a rear view of the machine showing the low voltage driving mechanical assembly, the loading and washing hydraulic pipes, the stainless steel tank and related pump and automatic distributing valves, as well as the waste material discharging funnel arrangement including a siphon element.

### DESCRIPTION OF THE PREFERRED EMBODIMENTS

With reference to the number references of the above mentioned figures, the machine according to the present invention, which has been generally indicated by the reference number 1, comprises a WC casing holding body 2, having a parallelepipedal configuration and a size similar to that of a beverage dispenser, with a base or bottom of preferably 60 x 80 cm and a height of about 190 cm.

The machine body 2 comprises a front opening 3 with a small weight guillotine door, thereby said front opening is always held in a closed condition.

The door comprises a Plexiglas plate, having a thickness of 3 mm and including a rubber gasket mounted on the bearing bottom thereof.

Thus, owing to its small weight, the door will not represent a danger in a case of an abrupt falling down thereof.

The opening 3 is so designed as to receive a WC casing 5 to be washed, having for example having a weight of 27 Kg in a full condition thereof.

In operation, upon having introduced the WC casing, a microswitch will detect the presence of said WC casing, thereby providing a first trigger signal for the machine electronic control system.

More specifically, the WC casing is introduced into a suitable cradle, and its outlet spout is prepared with an open plug, by inserting it for bearing on a dedicated base or bottom.

By means of a front manual lever 6, including a lever knob 7 painted in red to be easily detected, said lever allows the valve 8 of the WC casing 5 to be opened, for discharging inside air and allowing white water to be introduced into said casing for rinsing the latter.

With said lever 6 in a START position, a second command detected by a microswitch is applied to the electronic managing system.

Upon having carried out his operation, a closure of said guillotine door, controlled by a third microswitch, causes said machine to be set to an automatic mode of operation, this condition being indicated by a green light.

The third microswitch has a double function of enabling the electronic managing system and having a safety stop feature, with the machine in an open condition.

Thus, by pressing a starting push-button, with a green light, the black water discharging cycle and WC casing washing and rinsing is started.

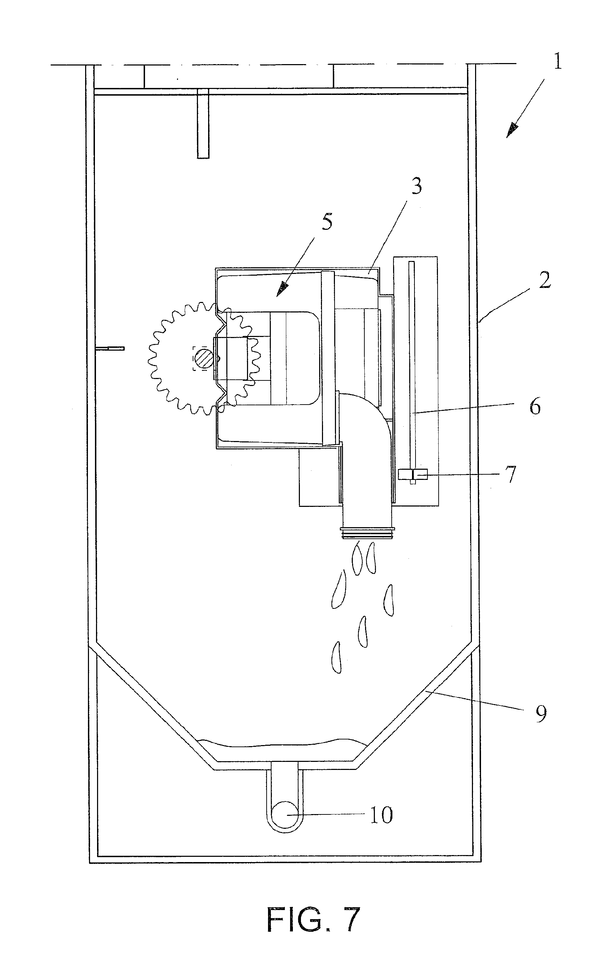

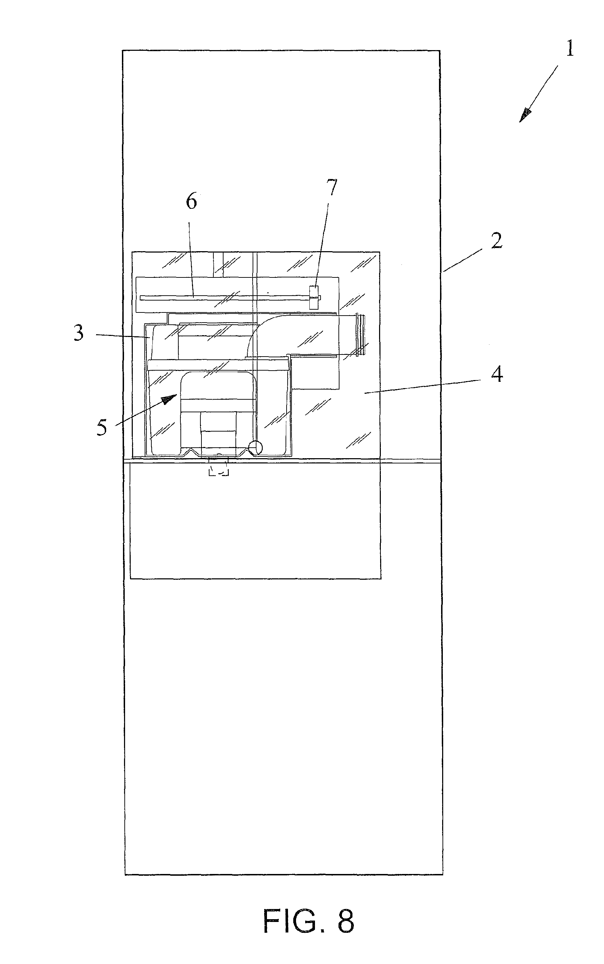

Figures 7 and 8 schematically shows some steps of this operation comprising:
1) rotating through 120° the WC casing, with a by gravity falling of the waste material contained therein; automatically starting a rinsing operation, by pressurized nozzles on the base of the machine;
2) recovering to a vertical position the WC casing, and switching off the apparatus washing hydraulic pump;
3) opening the white water loading valve for washing the inside of the casing; loading 5 1 water; switching off the loading valve, with a reciprocating rotation, at a small speed, of the WC casing for 15 seconds;
4) rotating again for 120°, for a drain discharging water inside the WC casing, while starting a pump for rinsing the machine base;
5) recovering to a vertical position and repeating the steps 3 and 4;
6) rotating again, as a last 120° rotary movement for a last casing discharging; starting the washing pump for providing a machine washing of 20 sec;
7) recovering again to a vertical position and ending the washing cycle by switching off the red light and switching on of the end of cycle light: "washing OK".

The above disclosed operation has an overall duration of about two minutes and may be controlled through the transparent door and by an inner white light, which is switched off at the end of the machine operating cycle.

If, during the washing step, the door 4 is abruptely open, then the overall system will be brought to a locked condition to be started again only when the door is properly closed, and as the push-button "START" is pressed again.

With the end of cycle light in a switched on condition, it is possible to withdraw the casing 5 from the inside of the machine by opening the guillotine door 4, manually unlocking the manual lever 6 through the red knob 7, and removing the emptied and rinsed WC casing 5, and this in a fully automatic, hygienic and safe manner.

From a constructional standpoint, the machine 1 is advantageously made as follows.

The body 2 is preferably made of a punched, pressed, assembled stainless steel material, and comprises a collecting tray 9 also made of a stainless steel material, with a siphon and drain 10 having a 120 mm diameter.

The loading door 4 is made, as stated, of a transparent Plexiglas material.

The machine further comprises a low voltage motor driving unit, operating at 24 volt, with a chain transmission 11, controls and contacts all of a low voltage type, included the 24 volt controlled hydraulic valve.

The water tank basin is made of a stainless steel material and has a volume of 80 1 with 220 volt recirculating pump and flow rate adjusting capability.

The hydraulic system comprises copper tubes having a diameter of 18 mm.

The basin is loaded by gravity under the control of a suitable float arrangement.

The electric system of a standardized type, comprises an automatic circuit breaker, a 24 volt power relay; a 12 volt door courtesy lamp; the used material: ip 65.

The machine may further comprise a token controlled system for a payment type of washing operation, and an optional swinging side small door with a top washing faucet, and the a water outlet.

It has been found that the invention fully achieves the intended aim and objects.

In fact, the invention has provided a machine adapted to automatically wash in a very efficient manner WC casings used in caravans, campers and the like.

The machine according to the present invention may be installed in highway servicing areas, and in any other desired place, and may operate under the control of a token arrangement.

In practicing the invention, the used materials, as well as the contingent size and shapes, can be any, depending to requirements.

## Claims

1. A machine for automatically emptying and washing WC casings used in caravans, campers and the like, **characterized in that** said machine comprises a WC casing holding body including an opening having a safety transparent door therein is engageable a WC casing to be washed; said machine further comprising detecting means for detecting a presence of said casing to automatically start a washing procedure; rotary means for rotating said casing for emptying said casing as said casing is washed; spraying means for spraying a pressurized fluid for washing said casing; safety means for switching off the washing operation if the access door is accidentally opened; electronic control means for electronically controlling the operation; and washing and waste fluid outlet means.

2. A machine, according to claim 1, **characterized in that** said door is a guillotine type of door and comprises a Plexiglas plate, having a small thickness and including a rubber gasket mounted on the bearing bottom thereof.

3. A machine, according to claim 1, **characterized in that** said machine further comprises a microswitch for detecting the presence of said casing as said casing has been arranged in said machine, thereby providing a first trigger signal for the electronic control managing system.

4. A machine, according to claim 1, **characterized in that** said cartridge is engaged in a casing cradle and that it has an outlet spout including an opened plug, to insert it in a bearing relationship on its base.

5. A machine, according to claim 1, **characterized in that** said machine comprises a front manual lever including a lever knob, said lever knob being painted in red to be easily detected, said lever allowing the valve of the WC casing to be opened for discharging the inside air and for allowing white water to be introduced into said casing for rinsing the latter.

6. A machine, according to claim 1, **characterized in that,** with said lever in a start position, a second command detected by a microswitch is applied to the electronic managing system and, upon having carried out this operation, a closure of said door, controlled by a third microswitch, causes said machine to be set to an automatic mode of operation; this condition being indicated by a green light; the third microswitch having a double function of enabling the electronic managing system and having a safety stop feature, with the machine in an open condition.

7. A machine, according to claim 1, **characterized in that** said machine further comprises an inner white light or lamp allowing the machine overall operation, which has a duration of about two minutes, to be controlled through the transparent door.

8. A machine, according to claim 1, **characterized in that** in the washing step, if said door is accidentally open, then the overall system is switched to a locked condition and being started again only as said door is closed while pressing a START pushbutton.

9. A machine, according to claim 1, **characterized in that** said holding body is preferably made of a stainless steel material, being punched, pressed, assembled and including a collecting tray, made of a stainless steel material, with a related siphon and outlet; a low voltage motor unit, with a chain transmission; control and contact, all of a low voltage type, the hydraulic valves included; a stainless steel water tank basin, with pumps for flow recirculating and adjusting purposes; the hydraulic system comprising copper pipes and the basin being loaded under gravity, as controlled by floating device; the standardized electric system including an upstream automatic circuit breaker, relay, loose lamps; use materials: ip 65.

10. A machine, according to claim 1, **characterized in that** said machine optionally comprises a token system and a swinging side small door, with a top faucet for washing and the white water outlet.
